# EUROPEAN PATENT APPLICATION

(11) **EP 3 139 443 A1**
(43) Date of publication of application: **08.03.2017**
(21) Application number: 15306339.1
(22) Date of filing: 01.09.2015
(51) Int. Cl.: H01R 4/02, H01R 4/62, H01R 43/02, B23K 20/12

(54) **ELECTRICAL HIGH VOLTAGE CABLE**

(71) Applicant: Nexans, 75008 Paris (FR)
(72) Inventor: ROD, Alf Erik, 1788 Halden (NO)
(74) Representative: Feray, Valérie

(57) **Abstract**

An electrical HV-cable (10) is disclosed comprising a first electrical HV-cable (12) and a second electrical HV-cable (14) wherein the first electrical HV-cable (12) comprises an electrical conductor made of a first conductor material and the second electrical HV-cable comprises an electrical conductor made of a second conductor material. The electrical HV-cable (10) comprises an electrical cable transition element (18) comprising a first cable transition element (22) made of the first conductor material and a second cable transition element (26) made of the second conductor material. The first cable transition element (22) is fixedly connected to the second cable transition element (26) in a weld joint (19) formed by friction welding or cold pressure welding. The first cable transition element (22) is fixedly connected to the first electrical HV-cable (12) in a first weld joint (31) and the second cable transition element (26) is fixedly connected to the second electrical HV-cable (14) in a second weld joint (32) such that a continuous electrical HV-cable (10) is formed. A method for joining two electrical HV-cables is also disclosed.

## Description

The present invention relates to an electrical high voltage (HV)-cable, a method for joining two electrical HV-cables in a factory and a use of the HV-cable as a subsea cable.

Electrical HV-cables are used to transmit electrical power over long distances and may also be positioned in water, i.e. subsea. An electrical subsea cable normally also comprises a part which is not submerged in water in one end or both ends of the electrical cable. The cost of different conductor materials differ and for long electrical cables, considerable savings can be made if a cheaper conductor material can be used, at least in parts of the electrical cable. Typical conductor materials are aluminium and copper. Aluminium is cheaper than copper, but is not as good an electrical conductor as copper. For reasons of costs, it is therefore desirable to use aluminium as the conductor material as long as it is possible.

When one or more parts of an electrical HV-cable is submerged and one or more parts of the electrical cable is not submerged, the surrounding temperature may vary considerably or if the cable is pulled through a predrilled pipe near shore the thermal condition is worse than for the cable at deep water. When the surrounding temperature is lower, a less good conductor material, such as aluminium, can be used since the conductivity will increase, while the more expensive conductor material, such as copper may be used when the surrounding temperature is higher. However, when an electrical HV-cable is provided with different conductor materials in different parts of the cable, one or more joints must be made which connects two parts of the electrical HV-cable having different conductor materials. Since different conductor materials have different properties, providing a durable and reliable joint can be challenging.

At present, an electrical cable comprising an aluminium conductor and an electrical cable comprising a copper conductor, may be joined by using a sleeve element which is crimped on the aluminium and copper conductors. The joint is in addition provided with a stiff housing. Such a joint is called a "field joint" since the operation of joining the aluminium conductor and copper conductor takes place out in in the field. Because of the stiff housing the joint is stiff, i.e. it cannot be reeled, and the housing increases the diameter of the electrical cable considerably. The stiff joint and the associated increase in diameter is also a problem when the electrical cable is to be reeled on a reel for storage and will also cause problems for equipment used when a cable is being laid subsea or on land.

A solution for terminating an electrical cable to a terminal or a similar device is shown in the British patent GB 1,330,002, wherein an aluminium end of an element, comprising a copper part and an aluminium part which are joined by pressure welding, is welded to the aluminium conductor of the cable while the copper part of the element is terminated. It is not mentioned how the cable is terminated, but the termination may for example comprise a clamp or a similar device. This publication describes the termination of a cable and does not relate to a continuous electric HV-cable which is reeled on a reel and later laid subsea or on land.

An object of the present invention is therefore to obtain an electrical HV-cable which comprises different conductor materials and which is reelable.

It is also an object of the present invention to reduce the costs of electrical HV-cables, especially electrical HV-cables which are partly submerged and partly passing over land.

It is also an objective of the present invention to obtain an electrical HV-cable, which comprises two or more parts with different conductor materials where the electrical HV-cable is produced in a factory and storable on a reel.

It is also an objective of the present invention that existing machinery used for the manufacturing of HV-cables can be used as normal in manufacturing of an HV-cable according to the present invention.

It is furthermore an objective of the present invention to obtain an electrical HV-cable having two or more parts where the variation of the diameter of the electrical HV-cable, including the joint or joints between two parts of the electrical HV-cable, is so low that reeling and laying of the electrical HV-cable is unproblematic.

These objectives are achieved with an electrical HV-cable as defined in claim 1, a method for joining two electrical HV-cables as defined in claim 11 and a use of the electrical HV-cable as defined in claim 22. Further embodiments of the electrical cable is defined in claims 2-10 and further embodiments of the method for joining two electrical cables is defined in claims 12-21.

There is provided an electrical HV-cable comprising a first electrical HV-cable and a second electrical HV-cable wherein the first electrical HV-cable comprises an electrical conductor made of a first conductor material and the second electrical HV-cable comprises an electrical conductor made of a second conductor material. The electrical HV-cable comprises an electrical cable transition element comprising a first cable transition element made of the first conductor material and a second cable transition element made of the second conductor material. The first cable transition element is fixedly connected to the second cable transition element in a weld joint formed by friction welding or cold pressure welding, and the first cable transition element is fixedly connected to the first electrical HV-cable in a first weld joint and the second cable transition element is fixedly connected to the second electrical HV-cable in a second weld joint such that a continuous electrical HV-cable is formed.

The first cable transition element is preferably solid and the second cable transition element is preferably also solid.

The first cable transition element and the second cable transition element may in one embodiment have substantially equal cross sectional areas. In another embodiment, the first cable transition element and the second cable transition element may have different cross sectional areas and the one of the first cable transition element and the second cable transition element having the largest cross sectional area preferably has an end portion with a gradually decreasing cross sectional area towards the weld joint. Usually the first cable transition element and the second transition element will have a substantially circular cross-sectional area perpendicular to the longitudinal axis of the cable transition element. The end portion will then be provided with a gradually decreasing diameter towards the weld joint between the first cable transition element and the second cable transition element. The end portion is consequently substantially conically shaped. At the weld joint, the cross sectional area of the first cable transition element and the second cable transition element are substantially equal. Furthermore, the cable transition element may be provided with a rounded edge at each end of the conically shaped end portion so that a slightly S-shaped end portion is obtained.

The first conductor material is preferably a first metallic material and the second conductor material is preferably a second metallic material which is different from the first metallic material.

Preferably, due to the design of the HV-cable, the first electrical HV-cable has a first outer diameter, the second electrical HV-cable has a second outer diameter and an electrical HV-joint comprising the cable transition element has a maximum diameter where the maximum diameter is no more than 10mm larger than the largest of the first outer diameter of the first electrical HV-cable and the second outer diameter of the second electrical HV-cable.

Furthermore, preferably, also due to the design of the present HV-cable, the first electrical HV-cable has a first outer diameter, the second electrical HV-cable has a second outer diameter and an electrical joint comprising the cable transition element has a maximum diameter where the maximum diameter is no more than 5-30% larger than the largest of the first outer diameter of the first electrical HV-cable and the second outer diameter of the second electrical HV-cable.

The first conductor material may be copper or an alloy comprising at least 95% copper by weight and the second conductor material may be aluminium or an alloy comprising at least 95% aluminium by weight. However, other combinations of metallic conductor materials or non-metallic conductor materials may be chosen as the first conductor material and the second conductor material if that is considered desirable.

The first cable transition element is preferably adapted for welding the first cable transition element to the first electrical HV-cable and that the second cable transition element is preferably adapted for welding the second cable transition element to the second electrical HV-cable by removing some material at the end of the first and second cable transition elements respectively. Preferably also the first cable transition element and the second cable transition element are adapted for welding by removing some material at their respective ends.

The first cable transition element is preferably fixedly connected to the first electrical HV-cable by fusion welding and that the second cable transition element is preferably fixedly connected to the second electrical HV-cable by fusion welding.

Preferably the first cable transition element is fixedly connected to the first electrical HV-cable by TIG-welding and the second cable transition element is preferably fixedly connected to the second electrical HV-cable by TIG-welding.

When the cable transition element is welded to the first electrical HV-cable and the second electrical HV-cable, it is normally covered with suitable electrical joint insulation, and the electrical HV-cable usually comprises an outer sheathing which covers the first electrical HV-cable, the second electrical HV-cable and the HV-joint which includes the cable transition element.

There is also provided a method for joining a first electrical HV-cable comprising an electrical conductor made of a first conductor material and a second electrical HV-cable comprising an electrical conductor made of a second conductor material, wherein a first cable transition element, which is made of the first conductor material, is fixedly connected to a second cable transition element, which is made of the second conductor material, in a weld joint by friction welding or cold pressure welding such that an electrical cable transition element is obtained. The first cable transition element of the cable transition element is further welded to the first electrical HV-cable and the second cable transition element of the cable transition element is welded to the second electrical HV-cable such that a continuous electrical HV-cable is formed.

Preferably, the cable transition element is thereafter machined to a desired shape and size as needed before being welded to the first electrical HV-cable and the second electrical HV-cable.

The first cable transition element and the second cable transition element are preferably machined to match the size of the electrical conductor of the first electrical cable and the electrical conductor of the second electrical cable respectively before the cable transition element is welded to the first electrical cable and the second electrical cable.

If the first cable transition element and the second cable transition element have different cross sectional areas, an end portion of the one of the first cable transition element and the second cable transition element having the largest cross sectional area is preferably machined such that the end portion obtains a gradually decreasing cross sectional area towards the weld joint. Since the first cable transition element and the second cable transition normally will be provided with a substantially circular cross-section perpendicular to the longitudinal axis of the cable transition element, the end portion will preferably have a gradually decreasing diameter towards the weld joint after the machining of the cable transition element has taken place. That means that the end portion is machined into a substantially conical shape.

The first cable transition element is preferably welded to the first electrical HV-cable by fusion welding and the second cable transition element is preferably welded to the second electrical HV-cable by fusion welding. Furthermore, the first cable transition element is preferably welded to the first electrical HV-cable by TIG-welding and the second cable transition element is preferably welded to the second electrical HV-cable by TIG-welding.

The first conductor material may be a first metallic material and the second conductor material may be a second metallic material which may be different from the first metallic material. In an embodiment the first conductor material is copper or an alloy comprising at least 95% copper by weight and the second conductor material is aluminium or an alloy comprising at least 95% aluminium by weight. However, other combinations of metallic conductor materials or non-metallic conductor materials may be chosen as the first conductor material and the second conductor material if that is considered desirable.

Preferably, due to the design of the HV-cable, the first electrical HV-cable has a first outer diameter, the second electrical HV-cable has a second outer diameter and an electrical HV-joint comprising the cable transition element has a maximum diameter where the maximum diameter is no more than 10mm larger than the largest of the first outer diameter of the first electrical HV-cable and the second outer diameter of the second electrical HV-cable.

Furthermore, preferably, also due to the design of the present HV-cable, the first electrical HV-cable has a first outer diameter, the second electrical HV-cable has a second outer diameter and an electrical joint comprising the cable transition element has a maximum diameter where the maximum diameter is no more than 5-30% larger than the largest of the first outer diameter of the first electrical HV-cable and the second outer diameter of the second electrical HV-cable.

The first cable transition element and the second cable transition element are preferably solid.

An electrical HV-cable as described above, is particularly suitable for use when the surroundings has varying temperatures, and may therefore be used as a subsea cable.

An embodiment of the present invention will now be explained in detail with reference to the figures where:
Figure 1a-b show a cable transition element before being machined to the desired size and/or shape.
Figure 2a-b shows the cable transition element in figures 1a-b after being machined to the desired size and/or shape.
Figure 3 indicates the position of the cable transition element between the first electrical cable and the second electrical cable.
Figure 4a shows an electrical HV-cable comprising a first electrical HV-cable and a second electrical HV-cable joined by a cable transition element.
Figure 4b is an enlarged view of the HV-cable joint of the electrical HV-cable shown in figure 4a.
Figure 5 shows the cable HV-joint of the electrical HV-cable including electrical insulation and outer sheathing.

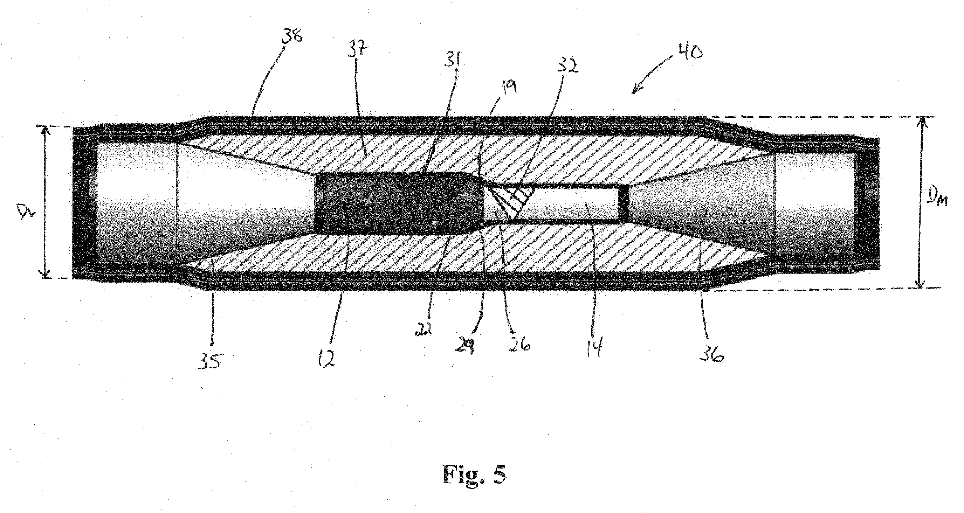

It should be noted that in all figures, except figure 5, only the conductor material of the electrical cables are shown. A complete electrical HV-cable will obviously comprise additional elements such as electrical insulation and outer sheathing as indicated in figure 5. In the context of the present application, high voltage (HV) is a voltage which is 1000V or larger.

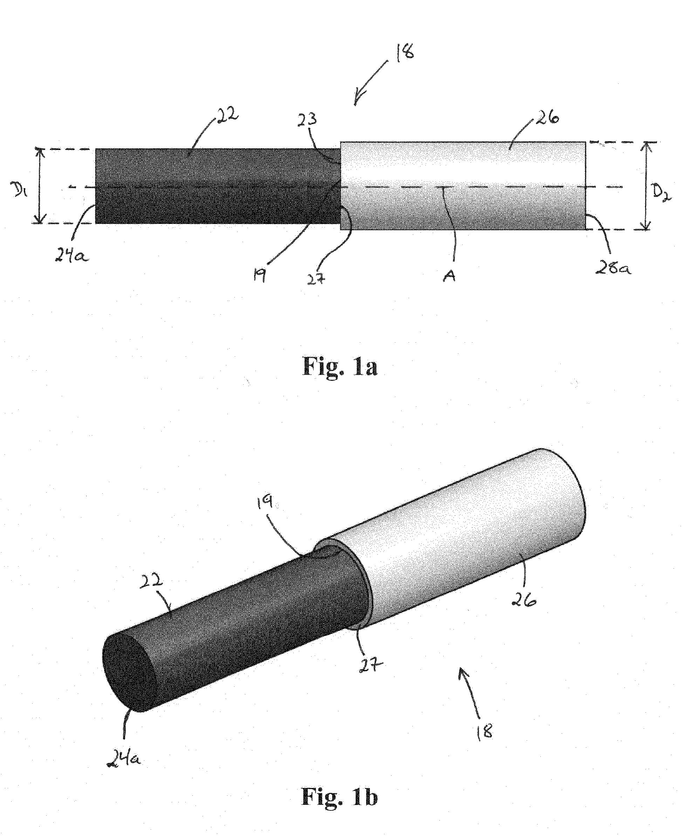

In figures 1a and 1b a cable transition element 18 according to the present invention is shown before the cable transition element 18 is being machined to its desired shape and size. The cable transition element 18 is used to join a first electrical HV-cable 12, which is made of a first conductor material, and a second electrical HV-cable 14, which is made of a second conductor material.

The cable transition element 18 is made by friction welding or cold pressure welding a first cable transition element 22 and a second cable transition element 26 such that a weld joint 19 is formed. As indicated in the figures, the first cable transition element 22 is preferably rod-shaped with a diameter D₁ and the second cable transition element 26 is preferably rod-shaped with a diameter D₂ where D₁ is smaller than D₂. A first end surface 23 of the rod-shaped first cable transition element 22 is placed abutting a first end surface 27 of the rod-shaped second cable transition element 26 and the friction welding or cold pressure welding is performed. The rod-shaped first and second cable transition elements 22, 26 are preferably solid, i.e. there are no openings or cavities in them.

The first cable transition element 22 is made of the above-mentioned first conductor material, for example copper, and the second cable transition element 26 is made of the above-mentioned second conductor material, for example aluminium. Other electrical conductor materials may be used if that is considered desirable. As shown in the figures, the first cable transition element 22 can have a smaller diameter than the second cable transition element 26 due to different physical properties, such as electrical conductivity, of the first conductor material and the second conductor material. The opposite is also possible, as indicated in figure 5.

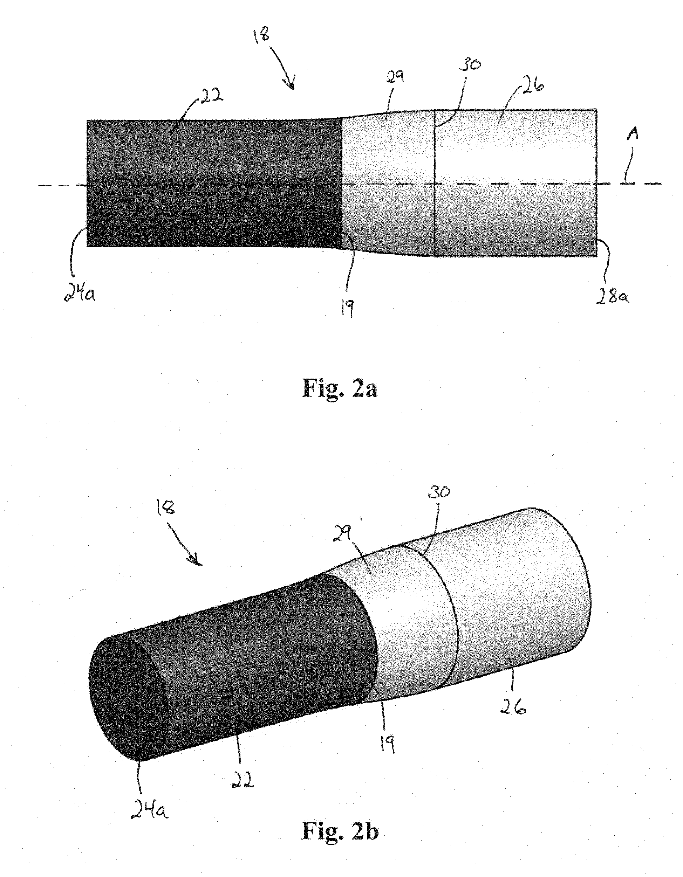

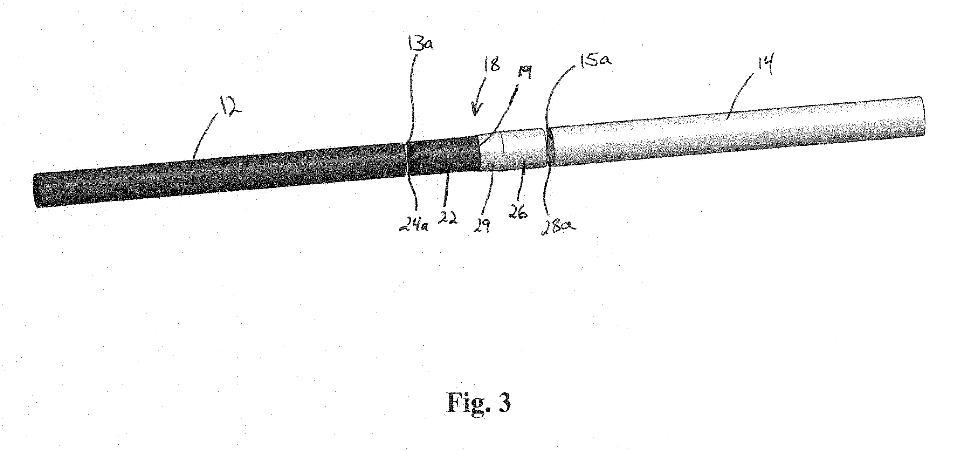

Referring to figures 2a, 2b and 3, after the first cable transition element 22 and the second cable transition element 26 have been joined in the weld joint 19, one or both of the cable transition elements 22, 26 are machined such that the desired shape and size of the resulting cable transition element 18 is achieved. The first cable transition element 22 and the second cable transition element 26 are machined as needed such that the diameter of the first cable transition element 22 is substantially equal to the diameter of the conductor of the first electrical cable 12 while the second cable transition element 26 is substantially equal to the diameter of the conductor of the second electrical cable 14.

An end portion 29, extending from the end of the second cable transition element to a line 30 indicated in figures 2a-b, of the second cable transition element 26 is further machined such that the cross-sectional area of the second cable transition element 26 gradually decreases towards the weld joint 19, i.e. since electrical cables are usually substantially circular in shape, the larger diameter of the second cable transition element 26 is gradually reduced towards the weld joint 19. At the weld joint 19, the cross-sectional area of the first cable transition element 22 is preferably substantially equal to the cross-sectional area of the second cable transition element 26, i.e. the first and second cable transition elements 22, 26 have substantially equal diameters. The final shape of the end portion 29 is preferably substantially conical and possibly with a slight rounding of the edges of the end portion 29 such that a very slightly S-shaped end portion is obtained. It should be obvious that if the first cable transition element 22 had had a larger diameter than the second cable transition element 26, it would have been the first cable transition element that would have been provided with an end portion with a gradually decreasing cross-sectional area towards the weld joint 19. This is shown in figure 5.

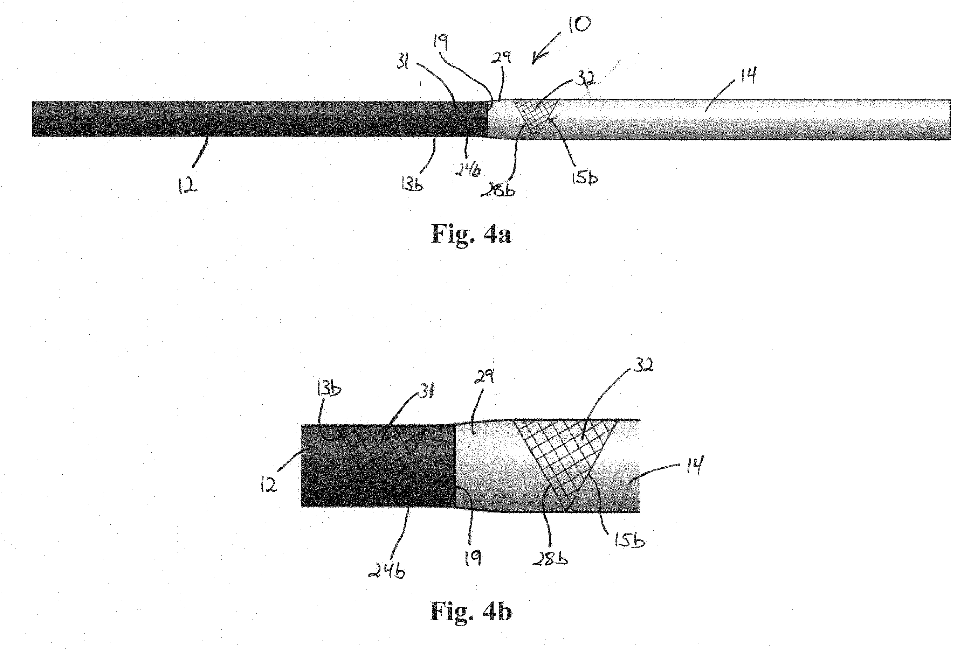

Referring now to figures 3 and 4a-b, when a cable transition element 18 with the desired shape and size has been obtained, the cable transition element 18 is joined to the first electrical HV-cable 12, preferably by fusion welding, for example by TIG-welding, and to the second electrical HV-cable 14, preferably by fusion welding, for example by TIG-welding. Other types of fusion welding may be used if that is considered desirable.

Before the fusion welding takes place, the second end surface 24a of the first cable transition element 22 and the second end surface 28a of the second cable transition element 26, which will usually be substantially perpendicular to the longitudinal axis A of the cable transition element 18, are prepared for welding by removing some material such that a sloping second end surface 24b of the first cable transition element 22 and a sloping second end surface 28b of the second cable transition element 26 are obtained. The sloped end surfaces are indicated in figures 4a-b.

Similarly, the end surface 13a of the first electrical HV-cable and the end surface 15a of the second electrical HV-cable, which will usually also be substantially perpendicular to the longitudinal axis A of the cable transition element 18, are prepared for welding by removing some material such that a sloping end surface 13b of the first electrical HV-cable and a sloping end surface 15b of the second electrical HV-cable are obtained. The sloped end surfaces are indicated in figures 4a-b.

After the first electrical HV-cable 12, the second electrical HV-cable 14 and the cable transition element 18 have been prepared for fusion welding, the cable transition element 18 is placed between the first electrical HV-cable 12 and the second electrical HV-cable 14 such that the first cable transition element 22 faces the first electrical HV-cable 12 and the second cable transition element 26 faces the second electrical HV-cable 14. The first cable transition element 22 is then welded to the first electrical HV-cable 12 resulting in a first weld joint 31, and the second cable transition element 26 is welded to the second electrical HV-cable 14 resulting in a second weld joint 32. The first weld joint 31 and the second weld joint 32 resulting from the fusion welding, preferably TIG-welding, and the resulting electrical HV-cable 10, are clearly indicated in figures 4a and 4b (without additional elements such as electrical insulation and outer sheathing).

In figure 5, there is shown a HV-cable joint 40 including a cable transition element 18 as described above where the first cable transition element 22 is welded to the first electrical HV-cable 12 in the first weld joint 31 and the second cable transition element 26 is welded to the second electrical HV-cable 14 in the second 32 weld joint. As indicated in the figure, the first electrical HV-cable 12 has a larger diameter than the second electrical HV-cable 14 and consequently the first cable transition element 22 is provided with an end portion 29 where the cross-sectional area decreases towards the weld joint 19. Preferably the end portion 29 has a substantially conical shape and is possibly rounded at either end such that the end portion 29 is slightly S-shaped.

As shown in the figure, the first electrical HV-cable 12 comprises electrical insulation 35 which has been partly removed at the end to allow for welding of the first electrical cable 12 to the cable transition element 18 and the second electrical HV-cable 14 comprises electrical insulation 36 which has been partly removed at the end to allow for welding of the second electrical cable 14 to the cable transition element 18.

The electrical insulation is chosen according to the conductor material of the electrical HV-cable. If the conductor material of the first electrical HV-cable 12 is copper, then the electrical insulation 35 will be an insulation material which is suitable for a copper conductor. If the conductor material of the second electrical HV-cable 12 is aluminium, then the electrical insulation 36 will be an insulation material which is suitable for an aluminium conductor.

To cover the HV-cable joint 40, there is further provided electrical insulation 37 that covers the cable transition element 18 and overlaps with the electrical insulation 35 covering the first electrical HV-cable 12 and the electrical insulation 36 covering the second electrical HV-cable 14. Finally the electrical HV-cable 10 is provided with outer sheathing 38 which also covers the HV-cable joint 40 as indicated in figure 5. The outer sheathing 38 will normally comprise a plurality of different layers, but this is not part of the present invention and will not be described further herein. Other types of layers not shown in figure 5 may also be included in the electrical cable 10.

As indicated in figure 5, the outer maximum diameter D_{M} of the HV-cable joint 40 is not much larger than the largest outer diameter D_{L} of the first electrical HV-cable 12 and the second electrical HV-cable 14 that make up the electrical HV-cable 10. The present invention will make it possible for the electrical HV-cable joint 40 to have an outer diameter D_{M} which is no more than 10mm larger than the largest diameter D_{L} of the outer diameter of the first electrical HV-cable 12 and the outer diameter of the second electrical HV-cable 14. This means that the increase in diameter is in the range 5-30% of the largest of the outer diameter of the first electrical HV-cable 12 and second electrical HV-cable 14. Reeling and laying of the cable 10 may therefore be carried out without problems and without any modification to reeling equipment and/or equipment on cable laying vessels or land based cable laying equipment. The largest percentages above is due to the fact that when the electrical HV-cables have relatively small outer diameters the workers who are actually manufacturing the electrical HV-joint 40 need a minimum of material to work with, and the percentage increase in the outer diameter of the electrical HV-joint is therefore larger than when the electrical HV-cables have larger diameters.

A further advantage of the electrical HV-cable 10 according to the present invention, is that due to the small increase in outer diameter of the HV-joint 40 relative to the outer diameter of the largest of the outer diameter of the first and second electrical HV-cable obtained with the present invention, manufacturing of the electrical HV-cable 10 can be carried out using existing machines which is used in manufacturing of cables with uniform diameter, also when various layers of the electrical HV-cable is applied on the HV-cable joint 10, such as extrusion of the insulation layer and the outer sheath. Extra manual operations during the manufacturing of the HV-cable are therefore kept to a minimum or avoided altogether which means that time and financial savings are made compared to known solutions where the making of such joints involves a considerable amount of manual work away from the factory where the cables are made.

The invention has now been explained with reference to a non-limiting example. A person skilled in the art will appreciate that modifications and changes may be made to this embodiment which will be within the scope of the invention as defined in the following claims.

## Claims

1. An electrical HV-cable (10) comprising a first electrical HV-cable (12) and a second electrical HV-cable (14) wherein the first electrical HV-cable (12) comprises an electrical conductor made of a first conductor material and the second electrical HV-cable comprises an electrical conductor made of a second conductor material, wherein the electrical HV-cable (10) comprises an electrical cable transition element (18) comprising a first cable transition element (22) made of the first conductor material and a second cable transition element (26) made of the second conductor material, and the first cable transition element (22) is fixedly connected to the second cable transition element (26) in a weld joint (19) formed by friction welding or cold pressure welding, and wherein the first cable transition element (22) is fixedly connected to the first electrical HV-cable (12) in a first weld joint (31) and the second cable transition element (26) is fixedly connected to the second electrical HV-cable (14) in a second weld joint (32) such that a continuous electrical HV-cable (10) is formed.

2. Electrical HV-cable according to claim 1, wherein the first cable transition element (22) is solid and that the second cable transition element (26) is solid.

3. Electrical HV-cable according to claim 1 or 2, wherein the first cable transition element (22) and the second cable transition element (26) have substantially equal cross sectional areas.

4. Electrical HV-cable according to claim 1 or 2, wherein the first cable transition element (22) and the second cable transition element (26) have different cross sectional areas, and that the one of the first cable transition element and the second cable transition element having the largest cross sectional area has an end portion (29) with a gradually decreasing cross sectional area towards the weld joint (19).

5. Electrical HV-cable according to one of the claims 1-4, wherein the first conductor material is a first metallic material and the second conductor material is a second metallic material which is different from the first metallic material.

6. Electrical HV-cable according to one of the claims 1-5, wherein the first electrical HV-cable (12) has a first outer diameter, the second electrical HV-cable (14) has a second outer diameter and an electrical HV-joint (40) comprising the cable transition element (22) has a maximum diameter, the maximum diameter being no more than 10mm larger than the largest of the first outer diameter of the first electrical HV-cable (12) and the second outer diameter of the second electrical HV-cable (14).

7. Electrical HV-cable according to one of the claims 1-5, wherein the first electrical HV-cable (12) has a first outer diameter, the second electrical HV-cable (14) has a second outer diameter and an electrical joint (40) comprising the cable transition element (22) has a maximum diameter, the maximum diameter being no more than 5-30% larger than the largest of the first outer diameter of the first electrical HV-cable (12) and the second outer diameter of the second electrical HV-cable (14).

8. Electrical HV-cable according to one of the claims 1-7, wherein the first conductor material is copper or an alloy comprising at least 95% copper by weight and the second conductor material is aluminium or an alloy comprising at least 95% aluminium by weight.

9. Electrical HV-cable according to one of the claims 1-8, wherein the first cable transition element (22) is fixedly connected to the first electrical HV-cable (12) by fusion welding and that the second cable transition element (26) is fixedly connected to the second electrical HV-cable (14) by fusion welding.

10. Electrical HV-cable according to one of the claims 1-9, wherein the first cable transition element (22) is fixedly connected to the first electrical HV-cable (12) by TIG-welding and that the second cable transition element (26) is fixedly connected to the second electrical HV-cable (14) by TIG-welding.

11. Method for joining a first electrical HV-cable (12) comprising an electrical conductor made of a first conductor material and a second electrical HV-cable (14) comprising an electrical conductor made of a second conductor material, wherein a first cable transition element (22), which is made of the first conductor material, is fixedly connected to a second cable transition element (26), which is made of the second conductor material, in a weld joint (19) by friction welding or cold pressure welding such that an electrical cable transition element (18) is obtained; and wherein the first cable transition element (22) of the cable transition element (18) is welded to the first electrical HV-cable (12) and the second cable transition element (26) of the cable transition element (18) is welded to the second electrical HV-cable (14) such that a continuous electrical HV-cable (10) is formed.

12. Method according to claim 11, wherein the first cable transition element (22) and the second cable transition element (26) are machined to match the size of the electrical conductor of the first electrical cable (12) and the electrical conductor of the second electrical cable (14) respectively before the cable transition element (18) is welded to the first electrical cable (12) and the second electrical cable (14).

13. Method according to claim 11 or 12, wherein, if the first cable transition element (22) and the second cable transition element (26) have different cross sectional areas, an end portion (29) of the one of the first cable transition element (22) and the second cable transition element (26) having the largest cross sectional area is machined such that the end portion (29) obtains a gradually decreasing cross sectional area towards the weld joint (19).

14. Method according to claim 13, wherein the end portion (29) is machined into a substantially conical shape.

15. Method according to one of the claims 11-14, wherein the first cable transition element (22) is welded to the first electrical HV-cable (12) by fusion welding and that the second cable transition element (26) is welded to the second electrical HV-cable (14) by fusion welding.

16. Method according to one of the claims 11-15, wherein the first cable transition element (22) is welded to the first electrical HV-cable (12) by TIG-welding and that the second cable transition element (26) is welded to the second electrical HV-cable (14) by TIG-welding.

17. Method according to one of the claims 11-16, wherein the first conductor material is a first metallic material and the second conductor material is a second metallic material which is different from the first metallic material.

18. Method according to one of the claims 11-17, wherein the first conductor material is copper or an alloy comprising at least 95% copper by weight and the second conductor material is aluminium or an alloy comprising at least 95% aluminium by weight.

19. Method according to one of the claims 11-18, wherein the first electrical HV-cable (12) has a first outer diameter, the second electrical HV-cable (14) has a second outer diameter and an electrical HV-joint (40) comprising the cable transition element (22) has a maximum diameter, the maximum diameter being no more than 10mm larger than the largest of the first outer diameter of the first electrical HV-cable (12) and the second outer diameter of the second electrical HV-cable (14).

20. Method according to one of the claims 11-18, wherein the first electrical HV-cable (12) has a first outer diameter, the second electrical HV-cable (14) has a second outer diameter and an electrical HV-joint (40) comprising the cable transition element (22) has a maximum diameter, the maximum diameter being no more than 5-30% larger than the largest of the first outer diameter of the first electrical HV-cable (12) and the second outer diameter of the second electrical HV-cable (14).

21. Method according to one of the claims 11-20, wherein the first cable transition element (22) and the second cable transition element (26) are solid.

22. Use of an electrical HV-cable according to any one of claims 1-10 as a subsea cable.
